# EUROPÄISCHE PATENTANMELDUNG

(11) **EP 2 698 496 A2**
(43) Veröffentlichungstag der Anmeldung: **19.02.2014**
(21) Anmeldenummer: 13179833.2
(22) Anmeldetag: 09.08.2013
(51) Int. Cl.: E06B 3/64, E06B 3/66, E06B 3/677

(54) **Anordnung zur Erhöhung der Isolationseigenschaften eines Fensters**

(30) Priorität: 13.08.2012 AT 8842012
(71) Anmelder: Kollmann, Gottfried, 8020 Graz (AT)
(72) Erfinder: Kollmann, Gottfried, 8020 Graz (AT)
(74) Vertreter: Ellmeyer, Wolfgang

(57) **Zusammenfassung**

Anordnung zur Erhöhung der Isolationseigenschaften einer bestehenden Glasfläche wie beispielsweise eines bestehenden Fensters umfassend ein Fensterglas, einen Fensterrahmen und einen Fensterstock, an welchem der Fensterrahmen angelenkt ist, wobei eine durchsichtige Scheibe sich über zumindest Teilbereiche des Fensters erstreckend parallel zum Fensterglas unter Herstellung eines Verbundes zum Fenster und unter Beabstandung zum Fensterglas zur Ausbildung eines Hohlraumes angeordnet ist.

## Beschreibung

Diese Erfindung betrifft eine Anordnung zur Erhöhung der Isolationseigenschaften einer bestehenden Glasfläche wie beispielsweise ein Fenster umfassend ein Fensterglas, einen Fensterrahmen und einen Fensterstock, an welchem der Fensterrahmen angelenkt ist.

Es sind nach dem Stand der Technik Folien bekannt, welche auf ein Fensterglas zur Erhöhung der Isolationseigenschaften der Fensterscheibe angebracht werden können.

In der in DE3045060 offenbarten Vorrichtung findet sich kein Hinweis auf eine einstückige Ausbildung von Scheibe und Distanzhaltern. Bei der in DE3045060 beschriebenen Vorrichtung sind Dichtung und Distanzhalter einstückig ausgebildet. Es findet sich in DE3045060 ebenso kein Hinweis auf eine Verteilung der Distanzhalter über die Fläche der Scheibe, welche die erfindungsgemäße Ausbildung von Scheibe und Distanzhaltern nahelegen könnte.

US4357187, DE2824896 und EP0002330 offenbaren eine Anordnung zur Erhöhung der Isolationseigenschaften eines Fensters, wobei die aufzubringende Scheibe ebenso nur an deren Rand über die Dichtung oder den Fensterrahmen gehalten wird. Es findet sich in US4357187, DE2824896 und EP0002330 ebenso kein Hinweis auf eine einstückige Ausbildung von Scheibe und Distanzhalter oder eine dazu äquivalente Lösung.

Die bekannten Systeme zur Erhöhung der Isolationseigenschaften von bestehenden Fenstern sind nicht zufriedenstellend. Die hier offenbarte Erfindung offenbart eine einfach zu installierende Anordnung, welche eine Verbesserung der Eigenschaften des bestehenden Fensters erlaubt, so dass das verbesserte Fenster ähnliche Eigenschaften wie ein neues Fenster aufweist.

Erfindungsgemäß wird dies dadurch erreicht, dass eine durchsichtige Scheibe sich über zumindest Teilbereiche des Fensters erstreckend parallel zum Fensterglas unter Herstellung eines Verbundes zum Fenster und unter Beabstandung zum Fensterglas zur Ausbildung eines Hohlraumes angeordnet ist.

Die Scheibe kann aus einem Glas, insbesondere Verbundglas, einem Plexiglas oder aus einem anderen durchsichtigen Material hergestellt sein. Die dämmenden Eigenschaften des Gesamtverbundes betreffen sowohl die Reduktion eines Wärmeflusses als auch die Übertragung von Schall.

Es kann eine Metalloxidschicht auf der Scheibe aufgebracht sein, um die Infrarotstrahlung zu reflektieren.

Die Scheibe, welche am bestehenden Fenster angebracht wird, darf ein Gewicht nicht überschreiten, welches vom bestehenden Fenster, insbesondere vom Fensterrahmen aufgenommen werden kann. Aus diesem Grund ist die Wand der aufzubringenden Scheibe möglichst klein zu halten.

Bei einem Verbund der Scheibe mit dem Fensterglas kann die Beabstandung mittels Distanzhalter hergestellt sein.

Die Distanzhalter sind vorzugsweise aus einem transparenten Material hergestellt und sind über die Fläche des Fensterglases in Abhängigkeit der zu erwartenden Belastungen verteilt.

Die Distanzhalter können eine haftende Oberfläche aufweisen, sodass die Distanzhalter auch die Scheibe am Fensterglas halten.

Die Distanzhalter können als Saugnäpfe ausgebildet sein.

Der Hohlraum ist als ein Vakuum ausgebildet.

Die Herstellung des Vakuums kann nach Methoden nach dem Stand der Technik mittels Ventil und Pumpe erfolgen. Das Ventil ist vorzugsweise so angeordnet, dass das Vakuum erneuert werden kann.

Die Scheibe weist eine möglichst große Erstreckungsfläche auf, um die dämmende Eigenschaft des Fensters möglichst hoch zu verbessern.

Die Scheibe kann eine höhere Biegesteifigkeit als das Fensterglas und/oder des Fensterrahmens aufweisen.

Das bestehende Fenster, insbesondere der Fensterrahmen kann durch Einflüsse nach gängiger Lehre verzogen oder deformiert sein, sodass eine durch Fensterrahmen und Fensterstock gebildete Fensterfuge beim Schließen des Fensters nicht dichtend geschlossen werden kann. Der Fensterstock ist in der Regel nicht oder nur wenig verformt. Durch das Anbringen der Scheibe mittels Distanzelement und Vakuum entsteht ein Scheibenverbund mit höherer Steifigkeit als der Rahmen. Es ist die Form des Fensters an jene des Fensterstockes anzupassen, sodass die Fensterfuge wieder dichtend - gegebenenfalls unter Zuhilfenahme von Dichtungsvorrichtungen - geschlossen werden kann.
Figur 1 zeigt ein Schnittbild einer möglichen Ausführungsform der erfindungsgemäßen Anordnung.
Figur 2 zeigt ein Schnittbild einer weiteren möglichen Ausführungsform der erfindungsgemäßen Anordnung.

In den Figuren sind die folgenden Bezugszeichen für die nachstehenden Elemente der erfindungsgemäßen Anordnung zugewiesen.
- 1: Fensterglas
- 2: Fensterrahmen
- 3: Fensterstock
- 4: Mauerwerk
- 5: Scheibe
- 6: (frei)
- 7: Distanzhalter
- 8: Hohlraum
- 9: (frei)
- 10: Fensterfuge
- 11: (frei)
- 12: Dichtung entlang Umfang von Scheibe
- 13: Ventil

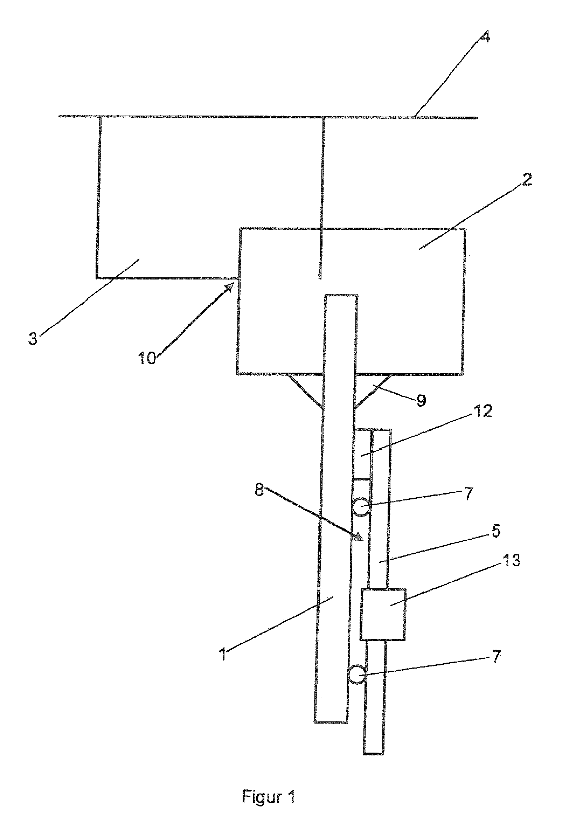

Figur 1 zeigt ein Schnittbild einer möglichen erfindungsgemäßen Anordnung zur Erhöhung der Isolationseigenschaften eines bestehenden Fensters. Das bestehende Fenster umfasst ein Fensterglas 1, einen Fensterrahmen 2 und einen Fensterstock 3, an welchem der Fensterrahmen 2 öffenbar angelenkt ist. Der Fensterstock 3 ist mit einem Mauerwerk 4 verbunden.

Es ist eine durchsichtige Scheibe 5, welche sich im Wesentlichen über das Fensterglas 1 erstreckt, im Wesentlichen parallel zum Fensterglas 1 unter Herstellung eines Verbundes zum Fenster und unter Beabstandung zum Fensterglas 1 zur Ausbildung eines Hohlraumes 8 angeordnet.

Die Scheibe 5 steht im Verbund mit dem Fensterglas 1, wobei die Beabstandung mittels Distanzhalter 7 hergestellt ist. Die Distanzhalter 7 sind über die Fläche des Fensterglases 1 in Abhängigkeit der zu erwartenden Belastungen verteilt. Die Distanzhalter 7 sind durchsichtig.

Der Hohlraum 8 umfasst ein Vakuum, um so die Isolationseigenschaft der erfindungsgemäßen Anordnung zu verbessern. Das Vakuum wird mittels dem Ventil 13 und einer Pumpe (in Figur 1 nicht dargestellt) hergestellt. Die Abdichtung des Hohlraumes 8 erfolgt über eine den Hohlraum 8 umlaufende Dichtung 12.

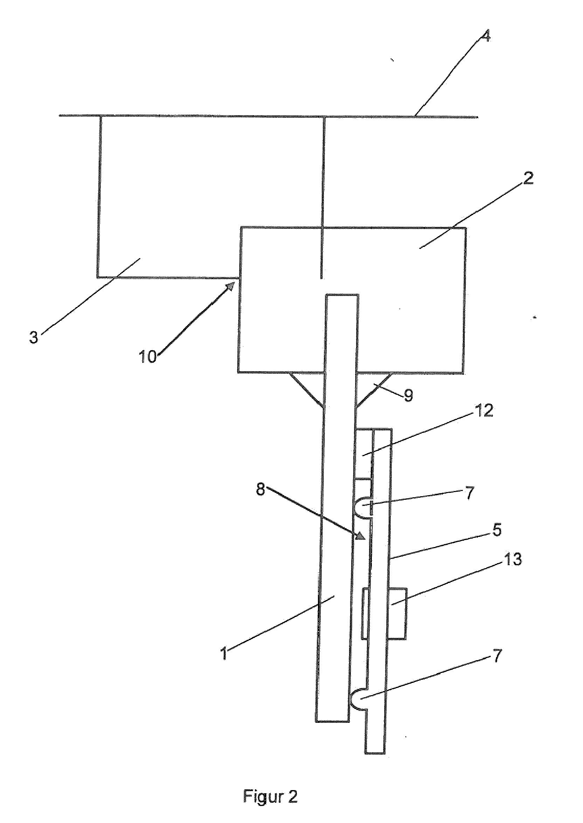

Figur 2 zeigt eine weitere Ausführungsform, welche zu der in der Figur 1 dargestellten Ausführungsform ähnlich ist. Die Distanzhalter 7 sind einstückig mit der Scheibe 5 ausgebildet.

## Patentansprüche

1. Anordnung zur Erhöhung der Isolationseigenschaften einer bestehenden Glasfläche wie beispielsweise eines bestehenden Fensters umfassend ein Fensterglas (1), einen Fensterrahmen (2) und einen Fensterstock (3), an welchem der Fensterrahmen (2) angelenkt ist,
wobei eine durchsichtige Scheibe (5) sich über zumindest Teilbereiche des Fensters erstreckend parallel zum Fensterglas (1) unter Herstellung eines Verbundes zum Fenster und unter Beabstandung zum Fensterglas (1) zur Ausbildung eines Hohlraumes (8) angeordnet ist, **dadurch gekennzeichnet, dass**
die Scheibe (5) im Verbund mit dem Fensterglas (1) steht, wobei die Beabstandung mittels Distanzhalter (7) hergestellt ist,
wobei die Distanzhalter (7) einstückig mit der Scheibe (5) ausgebildet sind.

2. Anordnung nach Anspruch 1, **dadurch gekennzeichnet, dass** der Hohlraum (8) ein Vakuum umfasst.

3. Anordnung nach einem der Ansprüche 1-2, **dadurch gekennzeichnet, dass** die flächenmäßige Erstreckung der Scheibe (5) im Wesentlichen der durch den Fensterrahmen (2) eingeschlossenen Fläche entspricht.

4. Anordnung nach einem der Ansprüche 1 bis 3, **dadurch gekennzeichnet, dass** die Scheibe (5) eine höhere Biegesteifigkeit als das Fensterglas (1) und/oder des Fensterrahmens (2) aufweist.
